# FASCICULE DE BREVET EUROPEEN

(11) **EP 2 711 334 B1**
(45) Date de publication et mention de la délivrance du brevet: **14.10.2015**
(21) Numéro de dépôt: 13306113.5
(22) Date de dépôt: 02.08.2013
(51) Int. Cl.: C01B 3/32, C01B 3/38, C01B 3/48, C01B 3/56

(54) **Procédé de production d'hydrogène pur à partir d'une charge hydrocarbonée dénaturée incluant une étape de désulfuration avec contrôle de température en amont du PSA**
Verfahren zur Herstellung von reinem Wasserstoff aus einem denaturierten Kohlenwasserstoff-Ausgangsmaterial einschließlich einer Entschwefelungsstufe mit Temperaturregelung stromaufwärts von PSA
Method of production of pure hydrogen from a denatured hydrocarbon feedstock including a desulfurization stage with temperature control upstream the PSA

(30) Priorité: 20.09.2012 FR 1202495
(43) Date de publication de la demande: 26.03.2014
(73) Titulaire: IFP Énergies nouvelles, 92852 Rueil-Malmaison Cedex (FR)
(72) Inventeur: AMBROSINO, Jean-Louis, 69360 TERNAY (FR); THOMAS, Michel, 69003 LYON (FR); BOYER, Christophe, 69390 CHARLY (FR); SURLA, Karine, 69560 SAINT CYR SUR LE RHONE (FR)

(56) Documents cités:
- EP-A1- 2 107 042
- EP-A1- 2 468 681
- WO-A1-2009/133255
- US-A1- 2011 085 967

## Description

### DOMAINE DE L'INVENTION

L'invention se situe dans le cadre de la production de gaz riche en hydrogène dans une unité de reformage mettant en oeuvre de préférence un réacteur de reformage autotherme.

La charge est constituée d'une charge hydrocarbonée pouvant aller de l'essence au gazole ou d'éthanol liquide issu de préférence de la biomasse. Pour éviter que l'éthanol soit utilisé à des fins de consommation alimentaire, l'éthanol est dénaturé, c'est à dire qu'on lui incorpore une certaine quantité de produits organiques, éventuellement soufrés, dit "dénaturant" qui le rend impropre à la consommation.

Ce dénaturant varie selon les pays, en particulier aux États-Unis, l'éthanol peut être mélangé avec de l'essence comportant des produits soufrés tels que le thiophène et ses dérivés alkylés. Plus généralement la production d'hydrogène par reformage autotherme d'une charge sulfurée nécessite une étape de désulfuration de ladite charge, le catalyseur de vaporefotrmage étant très sensible aux impuretés soufrées.

Le procédé de production d'hydrogène par reformage autotherme d'une charge hydrocarbonée est bien connu en soi. Il comprend un réacteur de reformage autotherme (abréviation de autothermal reactor noté ATR) suivi d'une unité dite de conversion du monoxyde de carbone par la réaction du gaz à l'eau qui vise à augmenter la production d'H2 et de CO2 associé (notée WGS), suivie d'une ou plusieurs unités de purification de l'hydrogène.

Dans le cadre de la présente invention cette unité de purification est constituée d'au moins une unité de type PSA (abréviation de "Pressure Swing Adsorption").

Le problème que cherche à résoudre la présente invention est celui du contrôle correct de la température d'entrée du réacteur de désulfuration et de la température de sortie du condenseur de gaz de synthèse en aval du réacteur de reformage autotherme (ATR).

Les points importants pour assurer la performance globale de l'unité aussi bien sur une charge hydrocarbonée que sur une charge éthanol dénaturé, sont les suivants :
- une température suffisante pour alimenter l'unité de désulfuration. En effet en dessous d'une température de 150°C, le réacteur ne permet pas d'assurer une désulfuration efficace.
- une température de sortie du gaz de synthèse en aval du réacteur de reformage autotherme suffisamment basse 15°C-40°C, de préférence de 15°C à 35°C, de manière à condenser l'eau présente dans le gaz de synthèse, puis de la séparer au niveau d'un ballon séparateur situé en amont du PSA.

Un gaz trop riche en eau ne pourrait en effet pas être traité au niveau du PSA, car cela détériorerait le tamis d'adsorption du PSA.

Il est donc essentiel de récupérer la majorité de l'eau nécessaire au procédé de reformage autotherme en amont dudit PSA. Un des objectifs du procédé selon la présente invention est précisément de garantir une récupération quasi totale de l'eau accompagnant le gaz de synthèse en amont du PSA.

Le procédé de reformage autotherme de la charge hydrocarbonée ou d'éthanol dénaturé selon la présente invention permet donc de réaliser la désulfuration de la charge hydrocarbonée ou de l'éthanol tout en respectant les deux points précédents concernant la température d'alimentation de l'unité de désulfuration et la température de condensation en amont de l'unité PSA.

### EXAMEN DE L'ART ANTERIEUR

Le brevet EP 2107 043 A1, décrit un schéma adapté à une unité fonctionnant avec une charge éthanol ne contenant pas de composés soufrés. Le problème de la désulfuration ne se pose donc pas. Néanmoins dans une variante du procédé selon la présente invention, la charge à traiter peut ne pas présenter de composés soufrés, l'intérêt du procédé portant alors sur une efficacité thermique améliorée.

Le brevet EP 2107042 divulgue une configuration relativement proche de la présente invention, en particulier au niveau de la disposition de l'échangeur permettant de réchauffer la charge d'éthanol dénaturé pour l'envoyer vers le réacteur de désulfuration, mais la température de la charge hydrocarbonée liquide est comprise entre 60°C et 150°C, ce qui est à l'extérieur de la température pratiquée selon la présente invention.

Le démarrage d'une unité complète est décrit dans le brevet EP2262725 A1. Dans ce brevet, l'unité est préchauffée à l'aide d'un bruleur dédié qui est alimenté par de l'air et une charge hydrocarbonée liquide après passage, si nécessaire, dans une unité de désulfuration.

Le brevet US 2011/085967 décrit un procédé de production d'hydrogène à partir de gaz naturel, ledit procédé comprenant une unité de désulfuration de la charge , un réacteur de réformage de type autotherme ("ATR"), une unité de conversion du monoxyde de carbone par "water-gas shift" et une unité de purification de l'hydrogène par adsorption modulée en pression ("PSA"). En amont de l'unité PSA se trouvent quatre échangeurs en série permettant la condensation de l'eau contenue dans le gaz de synthèse, le premier échangeur utilise comme fluide froid le gaz naturel à désulfurer. Le second échangeur (72) utilise de l'eau de refroidissement, le troisième échangeur (70) utilise de l'eau déminéralisée, et le quatrième échangeur (74) utilise de l'eau et de l'air.

Le document EP 2 468 681 décrit un procédé de production d'hydrogène intégré thermiquement par reformage d'une charge hydrocarbure dans un réacteur de vaporeformage par échange de chaleur à co-courant, dans un échangeur de type charge effluent. La température du gaz de synthèse en sortie dudit échangeur est comprise entre 250°C et 400°C.

### DESCRIPTION SOMMAIRE DES FIGURES

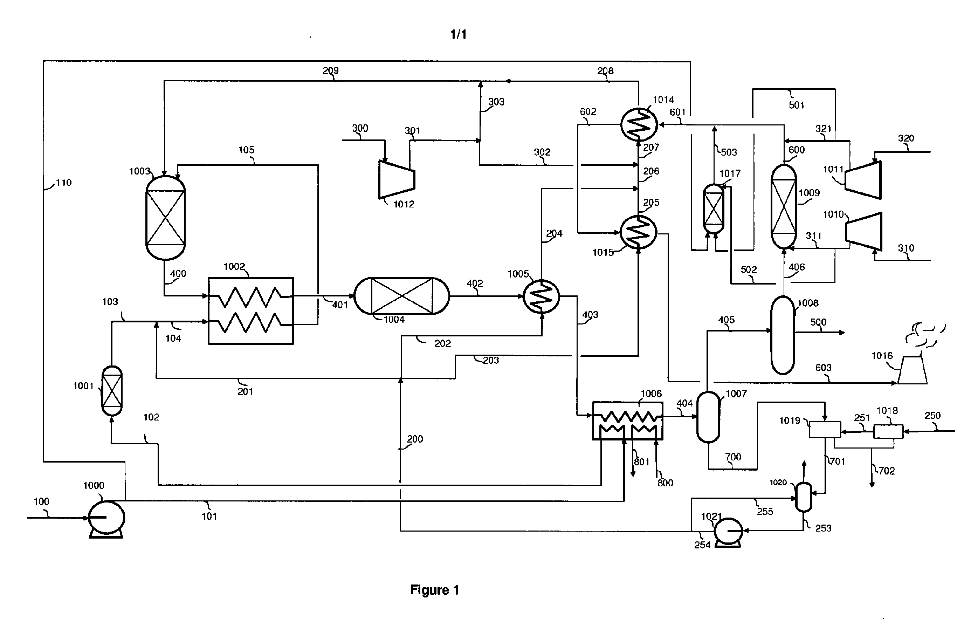

La figure 1 est un schéma du procédé selon l'invention dans lequel sont notées les unités principales: le réacteur de désulfuration (1001), le réacteur de reformage autotherme (1003), le réacteur de la conversion du CO par réaction de gaz à l'eau (1004), l'unité de purification PSA (1008), le brûleur catalytique (1009), le brûleur de démarrage (1017) ainsi que l'échangeur de refroidissement du gaz de synthèse en aval du réacteur de WGS (1004) et le ballon de séparation (1007).

### DESCRIPTION SOMMAIRE DE L'INVENTION

Le procédé décrit dans la présente invention résout un problème qu'on peut exposer de la manière suivante:
Il s'agit de garantir la condensation totale de l'eau contenue dans le gaz de synthèse en amont de l'unité de purification par PSA pour pouvoir utiliser de façon fiable ladite unité PSA dont le tamis est sensible à la présence d'eau. En effet, selon l'état de l'art, en particulier selon EP 2107042, deux échangeurs distincts sont disposés sur le circuit du gaz de synthèse pour refroidir le gaz de synthèse, puis condenser l'eau contenue dans ledit gaz de synthèse en amont de l'unité PSA. Ces échangeurs ne peuvent pas simplement être mis en série, mais doivent être couplés. En effet, un début de condensation du gaz de synthèse apparaît en sortie du premier échangeur dans une large gamme de conditions opératoires. Ceci entraine une mauvaise distribution des fluides sur le second échangeur, pénalisant ainsi le transfert thermique entre les 2 fluides.

La présence d'eau condensée, à la sortie du premier échangeur rend critique la distribution du mélange gaz/liquide à l'entrée du deuxième échangeur. Ce type de configuration, à moins d'utiliser des distributeurs spécifiques et complexes, va engendrer un phénomène de mauvaise distribution, c'est à dire un écoulement préférentiel du gaz et du liquide.

Cette mauvaise distribution risque de dégrader fortement l'efficacité de l'échange thermique dans le second échangeur, pouvant ainsi conduire à une condensation partielle de l'eau présente dans le gaz de synthèse lui même.

La présente invention décrit un échangeur situé en amont du PSA qui permet d'assurer la condensation totale de l'eau en sortie dudit échangeur et d'éviter toute discontinuité dans l'écoulement du gaz de synthèse.

Un autre aspect de la présente invention réside dans l'utilisation de la charge du procédé prise avant le préchauffage et sous pression comme combustible du brûleur de démarrage.

De manière simplifiée on peut présenter le procédé selon la présente invention comme un procédé de production d'hydrogène pur à partir d'une charge hydrocarbonée ou d'éthanol contenant des produits soufrés jusqu'à une teneur de 50 ppm, ledit procédé comprenant une unité de désulfuration de la charge, un réacteur de reformage autotherme (ATR), une unité de conversion du monoxyde de carbone (WGS) et une unité de purification de l'hydrogène par PSA, procédé dans lequel en amont de l'unité de purification par PSA se trouve un échangeur (1006) permettant la condensation totale de l'eau contenue dans le gaz de synthèse provenant du réacteur de reformage autotherme (ATR), ledit échangeur (1006) étant constitué de deux parties :
- une première partie qui réalise le refroidissement du gaz de synthèse en faisant appel comme fluide froid à la charge à désulfurer,
- une seconde partie qui poursuit le refroidissement jusqu'à condensation totale de l'eau contenue dans le gaz de synthèse à une température comprise entre 25°C et 35°C en faisant appel à de l'eau qui est elle même refroidie par un groupe froid ou une tour de refroidissement non représentés sur le schéma.

Le procédé de production d'hydrogène selon la présente invention réalise la désulfuration de la charge en phase liquide à une température comprise entre 155°C et 180°C, et de manière encore davantage préférée à une température comprise entre 155°C et 170°C. Le Procédé de production d'hydrogène selon la présente invention fait appel à l'échangeur (1006) qui est un échangeur à plaques, les deux parties de l'échangeur fonctionnant chacune à contre courant (c'est à dire avec un écoulement des deux fluides parallèle mais en sens contraire) par rapport à l'écoulement du gaz de synthèse à refroidir. Dans une variante encore préférée de la présente invention ledit échangeur (1006) est un échangeur à plaques soudées.

L'échangeur sera de préférence réalisé par un empilement de plaques délimitant une pluralité de canaux parallèles. Ces plaques permettent de conserver une même section de passage pour réaliser l'étape refroidissement et de condensation de l'eau contenu dans le gaz de synthèse qui s'effectue dans des canaux traversant tout l'échangeur.

Cette configuration offre en outre l'avantage de ne pas poser de problème de distribution du gaz de synthèse en cas de condensation partielle d'eau. En effet, cette apparition de liquide nécessiterait un dispositif spécifique pour distribuer le gaz et le liquide de façon identique dans l'ensemble des canaux.

Dans les autres sections, la charge à préchauffer en éthanol dénaturé au niveau de la première partie de l'échangeur (1006), et l'eau de refroidissement au niveau de la seconde partie de l'échangeur (1006) s'écoulent à travers deux réseaux de canaux distincts situés entre les nlaques destinées au gaz de synthèse.

Selon la présente invention, le brûleur de démarrage (1017) est alimenté par une partie (110) de la charge du procédé prise à température comprise entre 5°C et 35°C, et sous pression comprise entre 12 et 16 bars.

### DESCRIPTION DETAILLEE DE L'INVENTION

La figure 1 est un schéma de procédé représentant le procédé de production d'hydrogène selon l'invention.

Ce procédé comporte :
- un réacteur de désulfuration (1001),
- un reformeur autotherme (1003),
- une section de purification du gaz riche en hydrogène produit comportant elle-même un réacteur de conversion du monoxyde de carbone par réaction de gaz à l'eau (1004), suivi d'un ballon de séparation (1007),
- un système de purification par adsorption (1008) dit "PSA"
- un brûleur catalytique (1009) brûlant la purge issue du PSA
- un brûleur (1017) servant au démarrage de l'unité.

L'intégration thermique est assurée par 5 échangeurs de chaleur (1002), (1005), (1006), (1014) et (1015).

Deux pompes (1000) et (1021) servent à alimenter l'installation en charge hydrocarbonée d'une part, et en eau d'autre part.

Un compresseur (1012) et deux soufflantes (1010) et (1011) servent à fournir respectivement l'air de procédé et l'air pour le bruleur (air primaire pour la combustion et air secondaire pour le contrôle de la température des fumées).

Enfin, l'eau récupérée dans le ballon de séparation (1007) est recyclée après retraitement dans l'unité (1019).

Pour compenser l'eau consommée par les réactions et la purge (702) nécessaire au bon fonctionnement du système de purification d'eau, un appoint d'eau est nécessaire via le conduit (250). L'eau ainsi ajoutée est également traitée dans l'unité (1018).

L'unité produit un flux d'hydrogène (H2) sous pression circulant via le conduit d'hydrogène (500), un flux de fumées circulant via le conduit de fumées refroidies (603) et une purge aqueuse circulant via le conduit de purge aqueuse (702).

Dans le procédé selon l'invention, l'unité de reformage autotherme est alimentée en charge via un conduit de circulation (100) par une pompe (1000) pour produire une charge liquide et sous pression circulant via un conduit de charge liquide (101). Cette charge est préchauffée dans l'échangeur (1006), puis envoyée via le conduit (102) à l'unité de désulfurisation (1001), et ressort désulfurée par le conduit (103).

L'eau est apportée à l'unité via un conduit de circulation d'eau (200) à une température proche de la température ambiante.

Une partie de cette eau, (noté flux n°1), circulant via le conduit (201) est ajoutée au flux de charge sous pression. Le débit de ce flux est contrôlé par une vanne non représentée sur le schéma.

Le mélange charge/eau est introduit via le conduit (104) en co-courant dans l'échangeur (1002). L'adjonction d'eau à la charge a pour but de contrôler le rapport eau sur carbone (H2O/C) du flux résultant du mélange de la charge liquide et du flux d'eau circulant via la conduite de mélange charge-eau (104).

De ce rapport (H2O/C) dépend le cokage ou non de la charge dans l'échangeur de chaleur (1002).

Le flux résultant du mélange de la charge liquide et du flux d'eau, et circule via la conduite de mélange charge-eau (104) dont la température est inférieure à son point d'ébullition, par exemple comprise entre 140 et 200 °C à une pression de 0,9 MPa (variable selon la teneur en eau choisie). Le flux (104) doit être vaporisé avant d'alimenter le réacteur de reformage autotherme, via le conduit charge-eau vaporisée (105).

Une seconde partie de cette eau, (noté flux n° 2), via la conduite d'eau (203), est vaporisée dans l'échangeur (1015) et ressort via le conduit (205).

La dernière partie de l'eau, (noté flux n° 3), via la conduite (202), est vaporisée dans l'échangeur (1005) et ressort via le conduit (204). Comme pour le flux n° 1, les débits des flux 2 et 3 sont contrôlés par une vanne non représentée sur le schéma de la figure 1.

Les flux (204) et (205) sont mélangés dans le conduit (206).

L'unité de reformage autotherme (1003) est également alimentée en air via le conduit d'air (300), qui est mis à la pression du procédé par un compresseur (1012) et circule à la pression voulue via un conduit d'air sous pression (301). Ce flux d'air est partagé en deux flux (302) et (303). Un des flux est mélangé via un conduit d'air (302) à la vapeur provenant du conduit (206). Ceci constitue un premier mélange vapeur-air dans le conduit (207).

Le mélange vapeur-air est surchauffé dans l'échangeur (1014), puis circule dans le conduit (208).

Ce mélange est ajouté au second flux d'air circulant dans le conduit (303) pour donner le flux (209). Le mélange éthanol-eau via le conduit (105) et le mélange air-eau via le conduit (209) alimentent le réacteur de reformage autotherme (1003). Il en résulte un gaz de synthèse chaud et sous pression circulant dans le conduit de gaz de synthèse (400).

Ce gaz de synthèse sous pression doit être rapidement refroidi pour éviter tout phénomène de corrosion brutale ("metal dusting" selon la terminologie anglo-saxonne). Pour cela, les flux circulant via le conduit de mélange charge-eau (104), et le conduit de gaz de synthèse (400) sont introduits dans l'échangeur de chaleur (1002) en configuration à co-courant.

Il en résulte un flux de charge vaporisée et surchauffée circulant via le conduit charge-eau vaporisée (105), et un flux de gaz de synthèse refroidi circulant via le conduit de gaz de synthèse refroidi (401).

Le gaz de synthèse refroidi reste à une température supérieure à son point de rosée, en général comprise entre 128 °C et 168 °C, et de préférence égale à 148 °C à une pression de 0,9 MPa.

L'échangeur de chaleur (1002) étant destiné à la vaporisation totale de la charge, les conditions de température sur les flux circulant via le conduit de charge-eau vaporisée (105) et le conduit de gaz de synthèse refroidi (401) sont contrôlées par le contrôle du débit du flux d'eau circulant via une conduite n° 1 d'eau (201) sous condition que le rapport H2O/C minimal soit assuré. Le contrôle du débit d'eau injectée à l'échangeur de chaleur (1002) est possible grâce à l'utilisation de trois circuits parallèles pour la vaporisation du flux complet de l'eau circulant dans le conduit d'eau (200).

Ce gaz de synthèse refroidi est injecté dans le réacteur de WGS (1004) pour améliorer le rendement en hydrogène.

Le gaz de synthèse appauvri en CO circulant dans le conduit (402) est refroidi par le biais d'un échangeur de chaleur (1005). La chaleur est recyclée par vaporisation d'une partie de l'alimentation en eau circulant dans le conduit d'eau (202) dans cet échangeur de chaleur (1005). Il en résulte un flux de vapeur, vaporisée et surchauffée, circulant via le conduit charge vaporisée (204) et un flux de gaz de synthèse appauvri en CO et refroidi circulant via le conduit (403). Le gaz de synthèse refroidi circulant dans le conduit de gaz de synthèse refroidi (403) est amené en dessous de son point de condensation (404), c'est-à-dire en général à une température comprise entre 15 et 40°C, dans l'échangeur de chaleur (1006).

Cet échangeur (1006) constitue la partie innovante de la présente invention. Il comporte deux sections de refroidissement.
a) La première par échange avec la charge liquide (101). Une partie de la chaleur du gaz de synthèse est récupérée via ce premier échange pour chauffer la charge avant entrée dans le réacteur de désulfuration (1001). Si besoin, il est possible de by-passer une partie du flux de charge afin de contrôler la température de la charge en entrée du réacteur de désulfuration.
b) La seconde section de l'échangeur (1006) permet de poursuivre le refroidissement et la condensation de l'eau contenue dans le gaz de synthèse par échange de chaleur avec de l'eau de refroidissement entrant dans l'échangeur via le conduit (800) et sortant via le conduit (801). Cette eau de refroidissement peut éventuellement provenir d'un groupe froid ou d'une tour de refroidissement non représentés sur le schéma.

A la sortie de l'échangeur (1006), le gaz de synthèse (404) est envoyé dans un ballon séparateur pour séparer le gaz de synthèse sec (405) de l'eau condensée (700). Le ballon (1007) peut être complété par un coalesceur (non représenté) pour améliorer l'efficacité de l'élimination de l'eau dans le gaz de synthèse. L'eau récupérée dans le ballon (1007) est recyclée dans le conduit de recyclage (700). Cette eau contient du CO2 dissous et des contaminants qu'il est nécessaire d'éliminer avant réutilisation. Ce traitement est réalisé dans l'unité (1019).

Pour compenser l'eau consommée par les réactions et la purge (702) nécessaire au bon fonctionnement du système de purification d'eau, un appoint d'eau est nécessaire.

L'eau froide ainsi ajoutée via le conduit (250) est aussi traitée dans l'unité (1018) avant de pénétrer via le conduit (251) dans le traitement secondaire (1019).

L'eau adoucie résultante (701) est conduite dans un ballon (1020) et pompée via une pompe (1021) vers le conduit (254). Une partie de ce flux d'eau est renvoyé dans le système de purification d'eau via la ligne (255) L'autre partie est destinée au procédé de reformage lui-même et passe par la ligne (200).

Le gaz sec issu du ballon (1007) est envoyé via la ligne (405) vers l'unité de purification PSA (Pressure Swing Adsorption) (1008). En sortie du PSA, l'hydrogène circulant dans le conduit d'hydrogène (500) est produit. Dans celui-ci, la quasi totalité des espèces autres que l'H2, typiquement et de façon non exhaustive celles présentes dans l'air ou coproduites par le reformage de l'éthanol, à savoir N2, CO, CO2, CH4, C2H4, C2H6, C3H8, C3H6, Ar ou H2O, s'adsorbe de façon réversible sur le lit de solide adsorbant du PSA qui est en général, mais pas exclusivement, constitué de charbon actif et/ou d'un tamis moléculaire minéral.

L'hydrogène n'est pas retenu et est produit avec une très grande pureté, les impuretés étant réduites à l'état de traces, en général inférieure à 500 ppm.

Les espèces adsorbées sont récupérées via le conduit de purge (406) par abaissement de la pression de l'enceinte du PSA (1008) à une pression proche de la pression atmosphérique entraînant la baisse de la pression partielle de chaque corps dans la phase gaz, et donc la désorption des espèces adsorbées. Cette purge (406) contient en plus des espèces désorbées de l'hydrogène.

La chaleur destinée à conditionner les flux d'alimentation en eau et en air du procédé est apportée par combustion de cette purge. Pour ce faire, ce flux (406) est envoyé dans le brûleur catalytique (1009). De l'air primaire (310) nécessaire à la combustion de la purge est mis en pression par une soufflante (1010) pour produire de l'air sous pression dans le conduit (311) qui est injecté dans le bruleur (1009). De l'air secondaire circulant via un conduit d'air secondaire (320) est mis sous pression par une deuxième soufflante (1011). Ce flux d'air secondaire sous pression et circulant via le conduit d'air secondaire sous pression (321) permet de contrôler la température des fumées issues du brûleur et circulant via le conduit de fumées (600).

Le mélange des fumées et de l'air secondaire circule dans la ligne (601) et est envoyé dans l'échangeur (1014). Ce dernier surchauffe le mélange vapeur-air (207) par récupération de la chaleur sensible des fumées (601). Les fumées partiellement refroidies sortent dans le conduit (602) et sont introduites dans l'échangeur (1015) qui a pour objet de vaporiser et surchauffer l'eau du circuit (203). Il en résulte un flux de fumées refroidies circulant via la conduite de fumées refroidies (603) évacuées par un évent ou une cheminée (1016).

Lors de la phase de démarrage, la charge est prélevée en sortie de la pompe (1000) par le conduit (110) pour alimenter le brûleur de démarrage (1017). La chaleur destinée à préchauffer le procédé est apportée par combustion de cette charge. Pour ce faire, le flux (110) envoyé dans le brûleur de démarrage (1017). De l'air primaire (320) nécessaire à la combustion est mis en pression par une soufflante (1011) pour produire de l'air sous pression dans le conduit 501 qui est injecté dans le bruleur (1017). De l'air secondaire circulant via un conduit d'air secondaire (310) est mis sous pression par une deuxième soufflante (1010).

Ce flux d'air secondaire sous pression et circulant via le conduit d'air secondaire sous pression (502) permet de contrôler la température des fumées issues du brûleur et circulant via le conduit de fumées (503).

Le mélange des fumées et de l'air secondaire circule dans la ligne (601) et envoyé dans l'échangeur (1014).

Dans une variante du procédé qui utilise une charge hydrocarbonée ou d'éthanol déjà désulfurée, on peut utiliser le même schéma que celui précédemment décrit en supprimant le réacteur de désulfuration. L'intérêt du schéma qui contient toujours l'échangeur (1006) fonctionnant en deux parties, est alors de réaliser une intégration thermique plus poussée puisque la première partie de l'échange s'effectue avec la charge hydrocarbonée ou d'éthanol non dénaturé circulant à contre courant.

La charge ainsi pré-chauffée permet de limiter les appoints en chaleur à l'amont du réacteur d'ATR pour amener la charge à la température d'entrée du réacteur.

Le gain en énergie peut être utilisé pour augmenter la quantité d'eau vaporisée injectée dans le réacteur ATR en mélange avec la charge hydrocarbonée et ainsi augmenter le rendement en hydrogène. Ce gain énergétique peut également être utilisé pour augmenter la température d'entrée du réacteur d'ATR qui permet également un meilleur rendement en H2 en réduisant le débit d'air dans le réacteur pour atteindre la température de reformage souhaitée.

### EXEMPLE SELON L'INVENTION

### Exemple 1

L'exemple ci dessous décrit les conditions opératoires d'un procédé de production d'hydrogène selon la présente invention.

La production de 50 Nm3/h d'hydrogène est réalisée à partir d'une charge d'éthanol dénaturé (95 % vol. éthanol, 5 % essence).

Le débit de charge est de 31,4 kg/h pompé et injecté sous pression dans l'échangeur 1006.

La charge contient 2,5 ppm de soufre "S".

La quantité de chaleur échangée au niveau de la première partie de l'échangeur (1006) en amont du PSA est calculée à partir des données suivantes:

Le refroidissement du gaz de synthèse est réalisé de 172 °C (flux 403) à 141,5°C, soit une puissance de 3,90 kW.

La charge d'éthanol dénaturé circulant à contre courant est ainsi chauffée de 20°C à 160°C pour être désulfurée en phase liquide dans le réacteur (1001).

La quantité de chaleur échangée au niveau de la seconde partie de l'échangeur (1006) en amont du PSA est calculée à partir des données suivantes:

La condensation de l'eau contenue dans le gaz de synthèse est réalisée de 141,5°C à 29°C (flux 404), soit une puissance de 61,3 kW par utilisation comme fluide froid d'eau circulant à contre-courant entrant à 25°C et sortant à 35°C (débit 5288 kg/h). La température du flux (404) entrant dans le ballon séparateur est de 29°C.

Dans le présent exemple 0,7% poids de gaz de synthèse est condensé, soit 1,35 kg/h à l'issue de la première partie de l'échange dans l'échangeur (1006).

La quantité d'eau recueillie dans la ligne (700) en sortie du ballon séparateur (1007) est de 76,9 kg/h. La quantité d'eau introduite via le conduit (200) est de 93,2 kg/h.

L'intégration thermique réalisée par la première partie de l'échange au niveau de l'échangeur (1006) permet un gain de 6 % sur la quantité de chaleur totale échangée au niveau de l'échangeur (1006), soit 65,2 kW.

La désulfuration de la charge éthanol dénaturé s'effectue en phase liquide, à une température de 160°C, et sous une pression absolue de 16 bars de manière à rester liquide dans le réacteur de désulfuration.

### Exemple 2

L'exemple 2 a pour but de montrer l'effet favorable de la plage de température d'adsorption choisie supérieure à 155°C, et préférentiellement comprise entre 155°C et 180°C.

On utilise une masse de captation composée de Ni⁰/NiO déposée sur silice-alumine (teneur en nickel : 55 % à 60 % poids), commercialisée par Axens sous la dénomination AxTrap-405. Cette masse est livrée passivée par du CO2 car le nickel est pyrophorique au contact de l'air. On réalise la désulfuration de différents gazoles (charge réelle) à différentes teneurs en soufre sur un équipement expérimental qui est une petite colonne de diamètre 2 cm et de hauteur 27 cm.

La VVH (rapport du débit de charge à traiter sur la masse de solide adsorbant) utilisée sur l'ensemble des essais est de 5,6 h⁻¹.

Des prélèvements de l'effluent en sortie de colonne sont effectués régulièrement dans le temps pour analyser la teneur en soufre par chromatographie en phase gazeuse.

L'efficacité de la désulfuration de la charge est déterminée par le volume de charge traitée correspondant au "perçage" du soufre (noté Vp), rapportée au volume de colonne (Vc), soit (Vp/Vc).

Plus ce volume (Vp) est élevé, plus l'efficacité de la désorption est importante.

Le tableau ci-dessous regroupe les résultats des essais.

La température d'adsorption est de 170 °C pour tous les essais.

Pour les deux derniers tests correspondant à une teneur en S de la charge de 0,35 ppm, la mesure de la teneur en S sur l'effluent donne une valeur indétectable (n.d.), ce qui correspond à un taux de désulfuration qu'on peut assimiler à 100%.

La valeur de 170°C choisie comme température d'adsorption conduit à un excellent taux de désulfuration en particulier lorsque la teneur en soufre de la charge à traiter est inférieure à 10 ppm.

| Temp. adsorption. (°C) | Conc. S Charge (ppm masse) | Vp/Vc | [S] moyen Effluent (ppm masse) | Taux Désulf. (%) |
|---|---|---|---|---|
| 170 | 6,4 | > 33 | 1,6 | 74,8 |
| 170 | 7,0 | > 33 | 1,4 | 79,6 |
| 170 | 6,9 | > 130 | 1,4 | 79,4 |
| 170 | 34,2 | 125 | 6,6 | 85,3 |
| 170 | 0,35 | > 33 | n.d. | ≅ 100 |
| 170 | 0,35 | > 170 | n.d. | ≅ 100 |

## Revendications

1. Procédé de production d'hydrogène pur à partir d'une charge hydrocarbonée ou d'éthanol contenant des produits soufrés jusqu'à une teneur de 50 ppm, ledit procédé comprenant une unité de désulfuration de la charge fonctionnant à une température comprise entre 155°C et 180°C, et de manière préférentielle entre 155°C-170°C, un réacteur de reformage autotherme (ATR)(1003), une unité de conversion du monoxyde de carbone (WGS) (1004) et une unité de purification de l'hydrogène par PSA (1008), procédé dans lequel en amont de l'unité de purification par PSA se trouve un échangeur (1006) permettant la condensation totale de l'eau contenue dans le gaz de synthèse provenant du réacteur de reformage autotherme (ATR), ledit échangeur (1006) qui est un échangeur à plaques, ayant deux parties fonctionnant chacune à contre courant par rapport à l'écoulement du gaz de synthèse à refroidir :
- une première partie qui réalise le refroidissement du gaz de synthèse en faisant appel comme fluide froid à la charge à désulfurer,
- une seconde partie qui poursuit le refroidissement jusqu'à condensation totale de l'eau contenue dans le gaz de synthèse à une température comprise entre 15°C et 40°C en faisant appel à de l'eau de refroidissement qui est elle même refroidie par un groupe froid ou une tour de refroidissement, et le procédé faisant appel à un brûleur de démarrage (1017) alimenté par une partie (110) de la charge du procédé prise à une température comprise entre 5° C et 35°C et sous une pression comprise entre 12 et 16 bars.

## Patentansprüche

1. Verfahren zur Herstellung von reinem Wasserstoff ausgehend von einer Kohlenwasserstoffcharge oder von Ethanol enthaltend schwefelhaltige Produkte bis zu einem Gehalt von 50 ppm, wobei das Verfahren ein Desulfurationseinheit für die Charge umfasst, arbeitend bei einer Temperatur zwischen 155°C und 180°C, vorzugsweise zwischen 155°C - 170°C, einen autothermen Reformationsreaktor (ATR) (1003), eine Kohlenmonoxid Konversionseinheit (WGS) (1004) und eine Einheit für das Aufreinigen des Wasserstoffes mittels PSA (1008), wobei oberhalb der Einheit für das Aufreinigen mittels PSA (1008) ein Wärmetauscher (1006) angeordnet ist, der die Kondensation des gesamten im Synthesegas enthaltenen Wassers ermöglicht, welches aus dem autothermen Reformationsreaktor (ATR) stammt, wobei der Wärmetauscher (1006) ein Plattenwärmetauscher ist, aufweisend zwei im Verhältnis zum Strom des zu kühlenden Synthesegases gesehen im Gegenstrom arbeitenden Gruppen:
- Eine erste Gruppe, die die Kühlung des Synthesegases durchführt durch Benutzen der zu desulfurierenden Charge als Kühlflüssigkeit,
- Eine zweite Gruppe, die die Kühlung bis zur gänzlichen Kondensation des im Synthesegas enthaltenen Wassers bei einer Temperatur zwischen 15°C und 40°C fortsetzt, unter hinzuziehen von Kühlwasser, das selber gekühlt wird durch eine Kühlgruppe oder eine Kühlstrecke, und wobei das einen Anfahrbrenner (1017) verwendet, versorgt durch einen Teil (110) der Charge des Verfahrens genommen bei einer Temperatur zwischen 5°C und 35°C und bei einem Druck zwischen 12 und 16 bar.

## Claims

1. Process for producing pure hydrogen from a hydrocarbon or ethanol feed containing sulphuric products up to a content of 50 ppm, said process comprising a desulphurisation unit of the feed functioning at a temperature of between 155°C and 180°C and preferably between 155°C-170°C, an autothermal reforming reactor (ATR)(1003), a carbon monoxide conversion unit (WGS) (1004) and a PSA hydrogen purification unit (1008), in which upstream of the PSA purification unit there is an exchanger (1006) which allows complete condensation of the water contained in the synthesis gas coming from the autothermal reforming reactor (ATR), said exchanger (1006), which is a plate exchanger, having two parts which each function in counter-current with respect to the flow of the synthesis gas which is to be cooled:
- a first part which cools the synthesis gas by using the desulphurisation feed as cold fluid,
- a second part which continues the cooling until complete condensation of the water contained in the synthesis gas at a temperature between 15°C and 40°C using the cooling water which is itself cooled by a refrigeration unit or a cooling tower, and the method using a startup burner (1017) fed by a part (110) of the process feed taken at a temperature of between 5°C and 35°C and under a pressure of between 12 and 16 bars.
